# EUROPEAN PATENT APPLICATION

(11) **EP 4 769 332 A1**
(43) Date of publication of application: **01.07.2026**
(21) Application number: 24223194.2
(22) Date of filing: 24.12.2024
(51) Int. Cl.: G06V 10/774, G06V 10/82, G06V 20/69, G06N 3/08, G06T 7/00

(54) **COMPUTER-IMPLEMENTED METHOD FOR DETECTING ONE OR MORE DEFINED CELL TYPES AND/OR CELLULAR INDICATORS, SUCH AS BIOMARKERS OR CELLULAR ABERRATIONS, IN PARTICULAR GENOMIC ABERRATIONS, FROM AN IMAGE OF A BODY LIQUID, BONE MARROW OR CYTOLOGY SMEAR SAMPLE**

(71) Applicant: Moonlight AI Sàrl, 2822 Courroux (CH)
(72) Inventor: Romano, Nicole, 2822 Courroux (CH); Ruiz, Christian, 2822 Courroux (CH); Krishnakumar, Rajiv, 4144 Arlesheim (CH); Flöther, Frederik, 4144 Arlesheim (CH); Baglio, Julien, 4144 Arlesheim (CH)
(74) Representative: Longchamp, Jean-Nicolas

(57) **Abstract**

The present invention relates to a computer-implemented method for producing a trained model for detecting one or more defined cell types and/or cellular indicators, such as biomarkers or cellular abnormalities, in particular genomic aberrations, from single-cell images obtained from a sample of a body liquid, bone marrow, cytology smear or slide preparations, in particular a blood smear sample. **It** relates also to a computer-implemented method for detecting one or more defined cell types and/or cellular indicators, such as biomarkers or cellular abnormalities, in particular genomic aberrations, from single-cell images obtained from a sample of a body liquid, bone marrow or cytology smear, in particular a blood smear sample.

## Description

### Technical Field

This invention relates to the field of machine learning and artificial intelligence-based computer-implemented inventions, specifically as it applies to the analysis of medical images. More precisely, the invention is concerned with the examination of single-cell images that are derived from various sources such as samples of body fluids, bone marrow or cytology smear or slide preparations, including but not limited to blood smear samples. The primary focus of this invention is the detection of specific cell types and/or cellular indicators, which may include biomarkers and cellular aberrations, such as genomic aberrations, from these single-cell images to classify the sample as indicative or non-indicative for the specific cell types and/or cellular indicators. **In** a preferred embodiment, the methods of the present invention take advantage of the unique capabilities of quantum computing.

### Background of the invention

The accurate detection of specific cell types, as well as the detection of specific cellular indicators, such as biomarkers or cellular abnormalities, in particular genomic aberrations and combinations thereof, are of paramount importance in medical diagnostics, disease prognosis, and therapeutic decision-making. Historically, these tasks have been performed through a combination of traditional imaging, cytological, and molecular techniques, including but not limited to manual inspection or chemical and biochemical processing of tissue samples. These methods are labour-intensive, delay treatment decision making, and require sufficient tissue to detect the analyte with physical and chemical methods.

Genomic aberrations refer to alterations in the DNA sequence or structure, which may involve deletions, duplications, amplifications, inversions, translocations, gene fusions or point mutations. Such aberrations can have various consequences at the cellular level, manifesting as functional abnormalities, structural disorganization, or uncontrolled proliferation. These aberrations are of particular concern in haematology and oncology, where they can serve as biomarkers for cancer diagnosis, prognosis, and therapy response or resistance. Cell type classification can refer to lineage, origin, location, function, cell cycle, differentiation or disease status, among others.

The particular appearance of cells in a sample is a reflection of their genome, epigenome, transcriptome and proteome. Aberrations can lead to atypical cellular morphology, including irregular nuclei, changes in cytoplasm granulation, changes in the ratio of nuclear size to cytoplasm width, abnormal chromatin distribution, and changes in cell size or shape. These resulting features are commonly analysed in morphological cytological examinations under the microscope but usually require subjective interpretation by highly trained professionals. Furthermore, the exact link between a genomic aberration and changes in cell morphology is rarely well-characterized.

Recent advances in high-resolution microscopy and image processing technologies have enabled the generation of large-scale datasets of single-cell images. This has paved the way for the integration of machine learning, particularly deep learning, into cellular image analysis. Machine learning models, especially convolutional neural networks (CNNs), have proven to be highly effective in automating the identification of cell types and detecting abnormalities such as genomic aberrations. These models are capable of extracting complex features from single-cell images, allowing for higher accuracy and consistency than traditional methods.

Moreover, there are computer-implemented methods for the classification of solid tissue samples with regard to whether or not they comprise cells with one or more genomic aberrations. These methods are advantageous in their non-destructive use of slide-mounted solid tissue samples that are made available in the standard clinical workflow. Unfortunately, the said methods cannot be applied to samples of body liquids, as the multi-cellular architecture, or lack thereof, as well as prevalence and spatial distribution of evaluable cells differs greatly in liquid samples. For example, while solid tissue cancer cells are typically found in contiguous regions, cells from a blood sample are dispersed and distributed randomly across the slide. Further, solid tissue slides do not consist of whole cells but a 3-5um section with partial cells cut from a tissue block. And in samples from body liquids, the ratio of malignant leukocytes to red blood cells in the blood of leukaemia patients can be as rare as 1:1000, and furthermore a detectable subclone bearing the genomic aberration could be present in as few as 1:10 of those cancer cells. This different cell distribution between solid tissue cancer and body liquid samples is also reflected in the used digitization procedures: whereas solid tissue sample slides are generally digitized with a whole slide image scanner, blood sample slides are digitized with hematology morphology analyzers, such as CellaVision or Vision Hema that search, detect and photograph a limited number of single cells of interest, e.g., lymphocytes [Kratz, A., Lee, S., Zini, G., et al.: Digital morphology analyzers in hematology: ICSH review and recommendations. International Journal of Laboratory Hematology (2019).]. The state of the art lacks a solution that can scale to the thousands of cells required to detect rare morphologies of interest while maintaining the single-cell approach that is most advantageous for liquid samples.

Liquid samples are important for the detection of the presence of genomic aberrations that can be linked to specific diseases or pathologies, as well as for the monitoring of the tumour over the course of treatment. For instance, detection of the driver mutation or deletion of the gene *TP53* is of primordial importance, being both prognostic for the aggressiveness of the tumor and predictive of the patient's response to treatment.

While the known machine learning models hold great promise, their practical application is hindered by several significant challenges. Current models, particularly those based on deep learning, typically require vast computational resources for both training and inference. Training these models often demands access to large, diverse datasets, high-performance computing hardware (e.g., GPUs), and extended processing times. Similarly, the inference phase, in which the trained model is applied to new image data, can also be resource-intensive, in particular in terms of energy consumption, making it difficult to implement these models in real-time or resource-constrained environments, such as smaller diagnostic labs or point-of-care settings.

The resource demands of these models pose a serious limitation to their broader adoption, especially in clinical environments where computational efficiency, speed, and cost-effectiveness are critical. Early learning plateaus and scarcity of annotated training data have led to the adoption of much larger models, including foundation models, in order to boost performance. Therefore, existing approaches often fail to balance the need for high accuracy with the need for resource-efficient operations, limiting their scalability and accessibility.

Furthermore, the "black box" nature of many deep learning models raises concerns about the interpretability of their predictions. Evaluation at the single cell level enhances the interpretability of predictions, but at the cost of computation and inference time. Explainability of predictions is a key issue in clinical applications, where the reasons behind an algorithm's decision need to be understood and trusted by healthcare professionals. If this is not possible, or difficult, adoption of such algorithms typically fails.

Thus, there is an unmet need for a more resource-efficient method that can detect cell types and/or cellular indicators, such as biomarkers or cellular genomic aberrations, while maintaining high accuracy and robustness. Such a method must reduce the computational and data resource requirements for both training and inference without compromising the quality and reliability of the results.

The present invention aims to address these challenges by providing an improved method for detecting cell types and/or cellular indicators, such as biomarkers or cellular abnormalities using machine learning applied to single-cell images. This method is designed to reduce the computational and data resource demands typically associated with deep learning models, particularly during training and inference, while preserving or possibly even enhancing the accuracy and interpretability of the results. By optimizing model architecture, training strategies, and inference processes, the invention facilitates the broader deployment of machine learning-based cellular analysis in diverse clinical and laboratory environments, overcoming the limitations of existing approaches.

### Summary of the invention

The object of the present invention is to propose novel computer-implemented methods, with which the above-described drawbacks of the known methods are completely overcome or at least greatly diminished.

According to the present invention, these objects are achieved in particular through the elements of the independent claims. The invention aims to provide a method for detecting cell types and/or cellular indicators by means of machine learning in a more efficient manner than the known methods. This is achieved by leveraging the advantages of Extreme Learning Machines, and especially Quantum Extreme Learning Machines, which offer faster training, improved computational efficiency, better generalization and optimization capabilities, and reduced energy consumption. Advantageous embodiments follow moreover from the dependent claims and the description.

In particular, the objects of the present invention are, in a first aspect, achieved by a computer-implemented method for producing a trained model for detecting one or more defined cell types and/or cellular indicators, such as biomarkers or cellular abnormalities, in particular genomic aberrations, from single-cell images obtained from a sample of a body liquid, bone marrow or cytology smear, in particular a blood smear sample, comprising:
a. receiving a training dataset comprising bags of feature vectors representing single-cell images of samples and corresponding target bag values;
b. initializing a first neural network of an attention-based Multiple Instance Learning model with a plurality of network parameters to compute an attention weight for each feature vector of the bags from which predicted bag values can be generated by the attention-based Multiple Instance Learning model;
c. training the first neural network by:
   i. processing, by the attention-based Multiple Instance Learning model, the plurality of bags of feature vectors to generate predicted bag values;
   ii. calculating, using a loss function, a prediction error based on a comparison between the predicted bag values and the corresponding target bag values;
   iii. updating at least a portion of the plurality of network parameters by optimizing the loss function;
d. outputting the trained model with the optimized network parameters for use in generating a bag value based on an input bag of feature vectors representing single-cell images of a sample, wherein from the bag value the bag of feature vectors can be labelled as indicative or non-indicative for the defined cell type and/or cellular indicators;
wherein the first neural network is an extreme learning machine (ELM).

This computer-implemented method offers several key advantages in the field of cell type and cellular indicator detection from single-cell images. By utilizing an attention-based Multiple Instance Learning model with a first neural network in the form of an extreme learning machine (ELM) to compute an attention weight for each feature vector, the system can improve accuracy in detecting defined cell types and/or cellular indicators, processing large datasets efficiently, and robustly handling noisy or incomplete data, such as a lack of single-cell annotations. The ELM architecture also enables faster and more resource efficient training and inference than networks trained using backpropagation, in particular due to a significantly smaller number of trainable parameters, facilitating real-time decision-making, which is particularly valuable in clinical diagnostics where time is critical. In particular, efficient training and inference allows for reducing the energy consumption required for the training and inference in comparison with methods known in the prior art.

Furthermore, the attention-based mechanisms allow for dynamic weighing of feature importance, making the model adaptable to variations in data distribution or quality. This adaptability makes the model more robust and effective in situations where the data may be inconsistent or noisy, like in images of body liquid, in particular in blood smear samples, or where a signal of interest may be rare.

The training data set can advantageously comprise feature vectors corresponding to images originating from the segmentation of a whole-slide image (WSI) of the sample accomplished by means of a neural network or by non-neural methods such as thresholding, region-based, or boundary/edge-based methods. Alternatively, the single-cell images could be acquired by a haematology morphology analyser, which digitizes part or all of the slide and segments individual cells in a single workflow. Furthermore, the segmentation process advantageously outputs information about the location of each single-cell image in the WSI.

The optional segmentation can advantageously be performed by means of a U-Net segmentation model [Ronneberger, O., Fischer, P., Brox, T.: U-net: Convolutional networks for biomedical image segmentation. In: MICCAI (2015)]. This model can be advantageously trained on images of blood, bone marrow, or other cells in a liquid environment, stained with sample-appropriate solutions, for example: May-Grünwald-Giemsa staining for blood or Papanicolau staining for cytology samples. Single cell masks for training this model can be advantageously generated by a pre-trained foundation model such as Segment Anything Model (SAM) or Medical Segment Anything Model (MedSAM) [https://openaccess.thecvf.com/content/ICCV2023/html/Kirillov_Segment_Anythi ng_ICCV_2023_paper.html, https://www.nature.com/articles/s41467-024-44824-z]. The model was trained on images from blood smears of healthy individuals, stained with May-Grünwald-Giemsa and imaged on a CellaVision DM96 hematology analyzer at the Hospital Clinic of Barcelona [https://futurebloodtesting.org/open-datasets/].

An optional step of feature vector normalization can be applied. By normalizing the feature vectors, the Extreme Learning Machine (ELM) can benefit from improved stability, as features with large ranges no longer dominate the learning process. This can lead to reduced overfitting and better generalization performance, making it easier for the model to learn complex relationships between input variables. Moreover, normalization helps to eliminate scaling issues that may arise when features are measured in different conditions, as for instance luminosity in a whole slide image. By bringing all features to a common scale, ELMs can focus on learning the underlying patterns and relationships without being biased by differences in the image capture conditions. Another significant advantage of feature vector normalization is its impact on convergence speed. Normalized features enable the ELM to converge faster, i.e. resource saving, as the model is no longer hindered by large ranges or outliers in the data. Lastly, normalized features can lead to improved generalization performance, as they reduce overfitting and enhance the model's ability to generalize to unseen data.

A further optional step of classifying the feature vectors according to defined cell types can be foreseen. In this case, a corresponding subset of feature vectors is selected and the step of processing the plurality of bags of feature vectors to generate predicted bag values is applied only to bags comprising only feature vectors of this subset. The different cell types can for instance include, but are not limited to, red blood cells, white blood cells, especially granulocytes and agranulocytes, and platelets.

It is important to note that for the training of the first neural network, the bags do not need to be comprised of feature vectors from a single sample only, as long as the target bag value stays known, and the number of positive feature vectors stays above the detection limit of the model. For example, if the detection limit of the model is 20% and the ground truth says 80% of cells are of the defined cell type or exhibit the defined cellular indicator, up to 80%-20% = 60% of feature vectors can be replaced with feature vectors from a different sample.

In a first preferred embodiment of the present invention, the parameters of all the layers of the first neural network are randomly initialised and only the parameters of the final layer are optimized during training. By initializing the parameters of all layers of the ELM-based neural network randomly, except for the final layer, which is optimized during training, the system can leverage the benefits of Extreme Learning Machines while still allowing for fine-tuned adjustments to be made at the output level. This approach allows for faster and more resource-efficient training and inference, particularly in terms of reducing energy consumption.

In another preferred embodiment of the present invention, the first neural network is implemented on a classical computer and is a fully connected neural network. The use of a classical computer allows for more widespread deployment and accessibility of the system, as it can be run on existing hardware without requiring specialized or expensive equipment. Secondly, the fully connected architecture enables the model to capture complex relationships between features in the data, which is particularly beneficial when working with high-dimensional single-cell image datasets. This leads to improved accuracy and robustness in detecting defined cell types and/or cellular indicators from the images.

**In** a further preferred embodiment of the present invention, all layers except for the final layer of the first neural network are implemented on a quantum computer. By implementing all layers except for the final layer of the first neural network on a quantum computer, it is possible to leverage the unique computational capabilities of quantum computers, such as superposition, entanglement and interference, for the training of the model. This allows, in particular, the model to learn from complex patterns and relationships in high-dimensional data (in the present context feature vectors comprising a high number of components), which enables it to detect subtle or rare cellular indicators more accurately than with a classical implementation. Using a quantum computer can also lead to a significant reduction in energy consumption for training, which is particularly beneficial for large-scale machine learning tasks that require extensive computational resources. By offloading computationally intensive operations to the quantum computer, the system can reduce its overall carbon footprint making it more sustainable and environmentally friendly. Quantum computing allows problems to be tackled with completely different algorithms from classical computing. Certain problems may thus be solved faster, more accurately, with less energy, or less stringent requirements in terms of input data volume and quality. These kinds of potential benefits are very much relevant to the model and application considered here.

In yet another preferred embodiment of the present invention, the feature vectors of the bags are encoded in the quantum state space of the qubits and initialised by applying random unitary transformations. This allows the system to utilize the unique properties of quantum states, such as superposition, entanglement and interference, to represent and manipulate the feature vectors in a highly efficient manner. By encoding the feature vectors in the quantum state space of the qubits, the system can take advantage of the high-dimensional Hilbert space offered by quantum mechanics, enabling the representation of complex relationships between features in the data. The application of random unitary transformations to initialize the qubit states introduces an element of randomness and uncertainty, which is beneficial for exploring the solution space and avoiding local minima. This approach enables the system to efficiently handle tasks that involve processing large amounts of data with high-dimensional feature spaces, such as single-cell image analysis.

Furthermore, this implementation also enables the system to reduce energy consumption for training, as the random unitary transformations can be applied using a minimal number of quantum gates, resulting in shallow quantum circuits and eventually in a lower computational cost. This makes the method more sustainable and environmentally friendly, while still achieving state-of-the-art performance in single-cell image analysis.

In a further preferred embodiment of the present invention, all layers except for the final layer of the first neural network form a fully entangling quantum circuit. By forming a fully entangling quantum circuit, the system can leverage the power of entanglement to represent complex relationships between features in the data in an extremely compact and efficient manner. This enables the model to capture subtle patterns and correlations that would be difficult or impossible to detect using classical computing methods. This implementation also allows for significant speedups and improvements in accuracy compared to classical computing, as the fully entangling quantum circuit can efficiently explore a vast Hilbert space of possible solutions. Additionally, this approach leads to a reduction in energy consumption for training, as the entanglement-based computation can be performed using a minimal number of quantum gates.

In another preferred embodiment of the present invention, the feature vectors are obtained by segmenting, advantageously by means of a third neural network, at least part of a whole slide image, and wherein the minimal size of the bags of the training data set is determined based on the segmentation yield and the detection limit of the ground truth. This allows to ensure that the bags of feature vectors of the training data are representative for the type of sample under investigation.

Advantageously, the minimal size of the bags of the training data set is determined based on the segmentation yield, the detection limit of the ground truth and an error value reflecting the statistical variation in bag sampling.

In a further preferred embodiment of the present invention, the model is trained on bags of feature vectors that have undergone defined set of transformations, wherein advantageously the spatial distance between feature vectors stemming from different object classes is maximized and the spatial distance between feature vectors stemming from the same cell type is minimized. The use of whole slide images provides a rich source of data for single-cell image analysis, as it allows for the collection of large numbers of cells in a highly controlled and standardized manner. By applying a defined set of transformations to these samples, the spatial distance between feature vectors stemming from different cells can be maximized, while the spatial distance between feature vectors stemming from the same cell is minimized.

This approach has several advantages. Firstly, it enables the model to capture subtle patterns and correlations that arise from the spatial organization of cells within a sample. Secondly, it allows for the efficient use of data, as the model can learn to recognize patterns in the spatial relationships between cells without requiring an excessive amount of training data.

The maximization of spatial distance between feature vectors stemming from different cells also enables the model to develop robustness to noise and variability in the data. This is because the model is trained on a diverse set of samples, each with its own unique characteristics, which helps to reduce overfitting and improve generalizability.

Furthermore, this approach can be used to train models for detecting specific types of cellular abnormalities or features, such as cancer cells or immune cells. By maximizing the spatial distance between feature vectors stemming from different cells, the model can learn to recognize patterns in the spatial organization in feature space of these cells, which is often a key indicator of disease.

In yet another preferred embodiment of the present invention, the method comprises further a step of bag-level augmentation. This allows for an optimal training of the first neural network without having access to a large number of features vectors corresponding to single-cell images of body liquid samples. The bag-level augmentation can comprise for instance bag subsampling (random selection of a subset of instances from the bag to create a new bag, while the label of the new bag remains the same as the original bag), bag merging (combination of instances from two or more bags to create a new bag, while the label of the new bag is typically decided based on some logical operation (e.g., AND, OR) applied to the labels of the original bags), instance transformation (applying instance-level transformations (e.g., flipping, rotating) to every instance in the bag), noise addition (addition of some form of noise to the instances within the bag, as for instance Gaussian noise) or feature-level augmentation (modification of the feature vectors in the bag in a manner consistent across all instances).

Advantageously, when single-cell annotations are not available, the minimal size of the bags in the training data set is given by the detection limit of the ground truth and the yield of the segmentation step. The minimum bag size can be calculated from the detection limit of the ground truth, the theoretical best possible detection limit of the model, and the yield of the segmentation step. The model's theoretical best detection limit for a bag size of M feature vectors is 1/M, and the segmentation yield Ys is the percentage of cells in the sample examined by the model. If a limit of detection for the ground truth D, for instance of 10%, is known, the bag size M that must be examined is found by: 1/(M*Ys) >= D + ε, where ε is an error allowing for statistical variations in bag sampling. This yields a minimum bag size of M=1/((D+ε)*Ys). On the other hand, the maximum bag size is not maximally bounded. One limitation may be the VRAM size, but this in principle can be overcoming by batching the data. However, the number of features per vector is limited by the by the number of available qubits. The latter can be extended beyond the mere number of available qubits on the quantum hardware thanks to the use of advanced quantum circuit techniques such as circuit knitting or mid-circuit measurements. These considerations show how such techniques can be adapted to current and future hardware, and therefore demonstrate how the present methods can improve as the hardware improves.

According to a second aspect, the present invention relates to a computer-implemented method for detecting one or more defined cell types and/or cellular indicators, such as biomarkers or cellular abnormalities, in particular genomic aberrations, from single-cell images obtained from a sample of a body liquid, bone marrow or cytology smear, in particular a blood smear sample, comprising the following steps:
a. Receiving feature vectors representing the plurality of single-cell images;
b. Defining at least one bag of feature vectors representative for the sample, wherein each feature vector represents a single-cell image;
c. Deriving from the at least one bag of feature vectors a bag value by means of a trained model according to the first aspect of the present invention.
d. Labelling the bag as indicative or non-indicative for the defined cell type and/or cellular indicators from the bag value;
e. Classifying the sample as indicative of the one or more defined cell type and/or cellular indicators when an indicative value dependent on the number of bags of feature vectors labelled as indicative meets or exceeds a predetermined threshold value.

Thanks to this method, it is in particular possible to reliably and automatically detect the presence of one or more cell types and/or cellular indicators, such as biomarkers or cellular aberrations, in particular genomic aberration, from single-cell images obtained for instance from whole slide images (WSI) of liquid samples containing cells or from microscope slides smeared with liquid samples containing cells.

By utilizing an attention-based Multiple Instance Learning model with an extreme learning machine (ELM) comprising a first neural network to compute an attention weight for each feature vector, the system can improve accuracy in detecting defined cell types and/or cellular indicators, processing large datasets efficiently, and robustly handling noisy or incomplete data. The ELM architecture also enables rapid inference, facilitating real-time decision-making, which is particularly valuable in clinical diagnostics where time is critical. Moreover, rapid inference allows for reducing the energy consumption required in comparison with methods known in the prior art.

The single-cell images originate advantageously from the segmentation of a WSI accomplished by means of a neural network or by non-neural methods such as thresholding, region-based, or boundary/edge-based methods. Alternatively, the single-cell images could be acquired by a hematology morphology analyzer, which digitizes part or all of the slide and segments individual cells in a single workflow. Furthermore, the segmentation process advantageously outputs information about the location of each single-cell image in the WSI.

The embedding of each single-cell image into a feature vector is advantageously performed by a trained neural network that is advantageously trained by self-supervised learning on single-cell images derived from at least part of whole slide images of smear samples that have undergone defined set of transformations, wherein advantageously the second neural network maximizes the spatial distance between feature vectors stemming from different cells and minimize the spatial distance between feature vectors stemming from the same cell.

In step b., at least one bag of feature vectors representative for the sample is defined. The number of bags per sample can be advantageously from 1 to 10 but could also be more than 10. The bag size can be from dozens of cells to millions of cells. The minimum bag size can be calculated from the detection limit of the ground truth, the best possible detection limit of the model, and the yield of the segmentation step. The model's theoretical best detection limit for a bag size of m feature vectors is 1/M, and the segmentation yield can be denoted Ys. If a limit of detection of 10% is assumed, the minimum bag size M is found by: 1/(m*Ys) >= 10% or by M=1/(10%*Ys). On the other hand, the maximum bag size is not maximally bounded. One limitation may be the VRAM size, but this in principle can be overcoming by batching the data. However, the number of features per vector is limited by the by the number of available qubits. The latter can be extended beyond the mere number of available qubits on the quantum hardware thanks to the use of advanced quantum circuit techniques such as circuit knitting or mid-circuit measurements.

An optional step of feature vector normalization can be applied and a further optional step of classifying the feature vectors to belong to defined cell types can be foreseen. In this case, a subset of feature vectors can be selected and the step of deriving from the at least one bag of feature vectors a bag value is done to a bag comprising only feature vectors of this subset.

Finally in step e., the sample is classified as indicative of the one or more defined cell types and/or cellular indicators when an indicative value dependent on the number of bags of feature vectors labelled as indicative meets or exceeds a predetermined threshold value. Important to note is that the number of bags can be one, in particular when the size of the bag is chosen such that the bag is for sure relevant for the sample; meaning that the bag and the sample can only have the same label.

In a first preferred embodiment of this second aspect, the single-cell images are obtained by segmenting at least a part of a whole slide image of the sample, advantageously by means of a third trained convolutional neural network. The segmentation can advantageously be performed by means of a U-Net segmentation model [Ronneberger, O., Fischer, P., Brox, T.: U-net: Convolutional networks for biomedical image segmentation. In: MICCAI (2015)]. This model can be advantageously trained on images of blood, bone marrow, or other cells in a liquid environment, stained with sample-appropriate solutions, for example: May-Grünwald-Giemsa staining for blood or Papanicolau staining for cytology samples. Single cell masks for training this model can be advantageously generated by a pre-trained foundation model such as Segment Anything Model (SAM) or Medical Segment Anything Model (MedSAM) [https://openaccess.thecvf.com/content/ICCV2023/html/Kirillov_Segment_Anythi ng_ICCV_2023_paper.html, https://www.nature.com/articles/s41467-024-44824-z]. The model was trained on images from blood smears of healthy individuals, stained with May-Grünwald-Giemsa and imaged on a CellaVision DM96 hematology analyzer at the Hospital Clinic of Barcelona [https://futurebloodtesting.org/open-datasets/].

In another preferred embodiment of the second aspect of the present invention, the method further comprises a step of labelling at least a part of the single-cell images corresponding to the feature vectors of the bag as indicative or non-indicative of the one or more defined cell types and/or cellular indicators. This allows prediction on the single-cell level for each cell of the bag and to identify which cell shows the one or more genomic aberration or are of the defined cell types. This allows also for counting the number of identified cells in the sample which can be a crucial for diagnosis purposes and for instance in the diagnosis of leukaemia and infectious or clotting disorders.

In a further preferred embodiment of the second aspect of the present invention, the method comprises a step of generating a heat-map of the labelled cells present within the at least part of a whole slide image, said heat-map being produced based on spatial location data for each of said labelled cells. This allows for identifying on the original whole slide image the presence and position of cells showing the one or more genomic aberration. This information can for instance allow a practitioner to make a more precise diagnostic or further examine the cells in which an indicator was detected. A heatmap can show the spatial distribution of white blood cells (WBCs) within a specific region of the blood smear.

In yet another preferred embodiment of the second aspect of the present invention, the method comprises a step of classifying the single-cell images into cell-types and wherein the bag of feature vectors comprises only feature vectors corresponding to one cell-type. This allows to detect the presence of the one or more cellular aberrations, in particular one or more genomic aberrations, on only one type of cell. For instance, in the evaluation of peripheral blood samples it may be desired to analyze only cells having a nucleus, such as leukocytes, or from a specific origin

In a further preferred embodiment of the second aspect of the present invention, the indicative value is the percentage of bags of feature vectors labelled as indicative. By using a percentage-based indicative value, the method can provide a more accurate representation of the likelihood that a sample contains a specific cell type or cellular indicator. Moreover, the percentage-based indicative value makes it easier to understand and communicate the results of the analysis, as it provides a clear and concise measure of the probability of interest. Finally, by using a proportion-based approach, the method can be more robust to variations in the number of bags or feature vectors, which can improve its overall performance and reliability.

In yet another preferred embodiment of the second aspect of the present invention, the method further comprises a step of generating a sub-cellular heat map for indicating the pixel-level position of any shape or texture changes in the cell resulting from the one or more abnormalities in the single-cell images. Advantageously, the value of the heatmap is connecting them to a user interface where an expert can look for patterns in the detected cell morphology, either validating known morphological changes or hypothesizing new ones linked to genomic aberrations.

According to a third aspect, the present invention relates to a data processing system comprising means for carrying out the steps of any one of the methods of the present invention.

According to a fourth aspect, the present invention relates to a computer program product comprising instructions which, when the program is executed by a computer, cause the computer to carry out the steps of any one of the methods of the present invention.

According to a fifth aspect, the present invention relates to a computer-readable storage medium comprising instructions which, when executed by a computer, cause the computer to carry out the steps of any one of the methods of the present invention.

### Brief description of the drawings

- Figure 1 shows the workflow of a preferred embodiment of the method according to the first aspect of the present invention;
- Figure 2 shows the workflow of a preferred embodiment of the method according to the second aspect of the present invention;
- Figure 3 illustrates the use of Extreme Learning Machine as first neural network of the attention-based Multiple Instance Learning model;
- Figure 4 shows an example of bag of single-cell images;
- Figure 5 shows an example of embedded feature vectors for the images of Figure 4;
- Figure 6 shows the unweighted attention-values for the bag of images of Figure 4;
- Figure 7 shows a comparison of the accuracy of the present methods with the prior art method;
- Figure 8 shows a comparison of the sensitivity of the present methods with the prior art method;
- Figure 9 shows a comparison of the specificity of the present methods with the prior art method; and
- Figure 10 shows a comparison of Area Under the Curve (AUC) of the present methods with the prior art method.

### Detailed description of preferred embodiments and presentation of experimental results

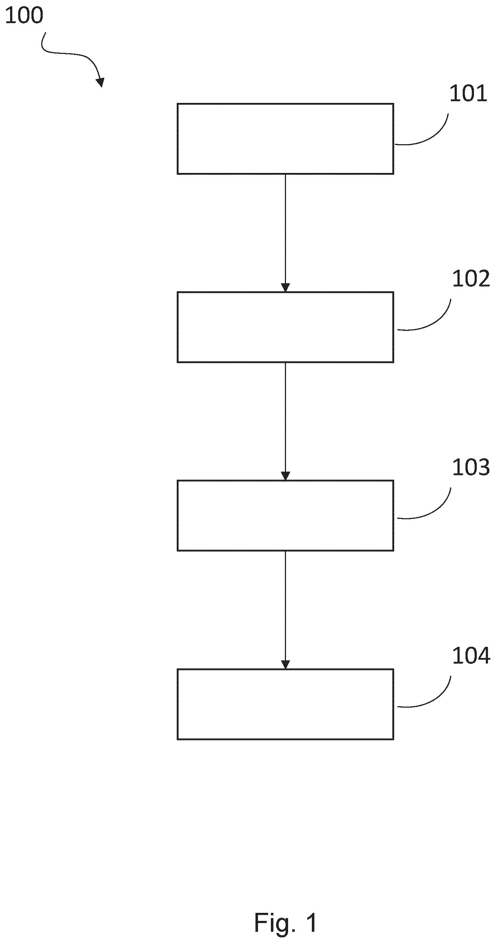

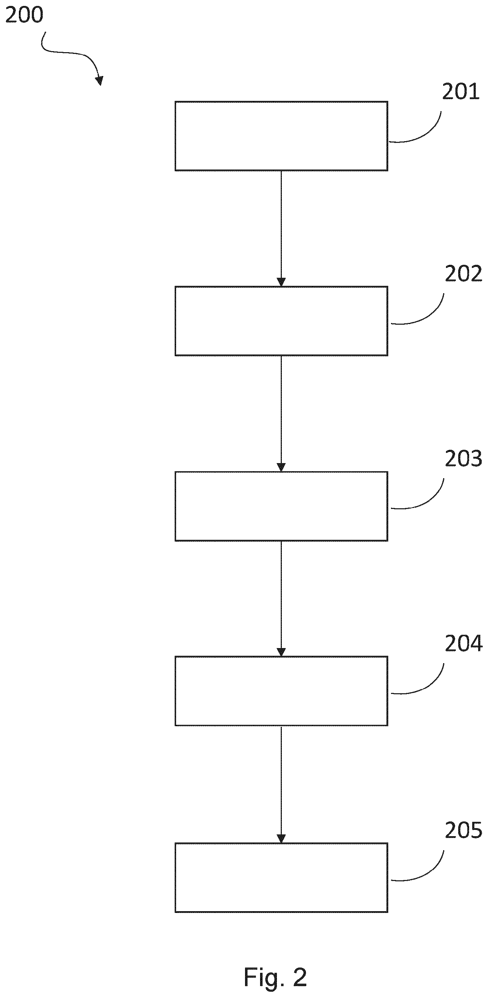

Preferred embodiments of the method according to the first aspect and the second aspect of the present invention are presented in Figures 1 and 2 and results of the methods are presented in the other figures.

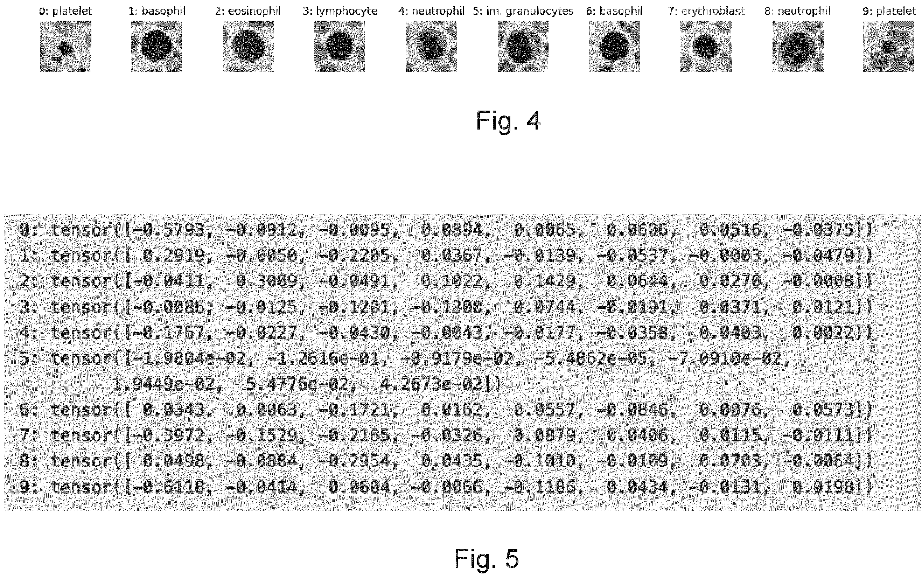

Figure 1 illustrates the workflow of a preferred embodiment 100 of the method for producing a trained model for detecting one or more defined cell types and/or cellular indicators from single-cell images obtained from a sample of a body liquid, bone marrow or cytology smear. Method 100 comprises a first step 101 where a training dataset comprising bags of feature vectors representing single-cell images of samples and corresponding target bag values is received. The training data set can advantageously comprise feature vectors corresponding to images originating from the segmentation of a whole-slide image (WSI) of the sample accomplished by means of a neural network or by non-neural methods such as thresholding, region-based, or boundary/edge-based methods. Alternatively, the single-cell images could be acquired by a hematology morphology analyzer, which digitizes part or all of the slide and segments individual cells in a single workflow. Furthermore, the segmentation process advantageously outputs information about the location of each single-cell image in the WSI. Figure 4 displays examples of single-cell images.

Each single-cell image of the bag of feature vectors has been embedded into a feature vector by means of a second trained convolutional neural network. Examples of embedded vectors are illustrated in Figure 5 for the single-cell images presented in Figure 4. Please note that throughout the whole application the terms vectors and tensors are meant to be synonyms. It is important to note that this embedding step can also be performed by transformer-based neural network. In either case, the second neural network operates advantageously on unannotated single-cell images and was advantageously trained on single-cell images that have undergone a set of pre-defined transformations, in order to maximize the distance between feature vectors stemming from different cells while minimizing the distance between feature vectors from the same cell (contrastive learning). The second neural network has thus undergone a self-supervised learning. While a self-supervised learning is favoured, the second neural network could have also undergone an unsupervised learning.

In step 102, a first neural network of an attention-based Multiple Instance Learning model is initialized with a plurality of network parameters to compute an attention weight for each feature vector of the bags from which predicted bag values can be generated by the attention-based Multiple Instance Learning model. The first neural network is according to the present invention an Extreme Learning Machine.

In step 103, the first neural network is trained by (i) processing, by the attention-based Multiple Instance Learning model, the plurality of bags of feature vectors to generate predicted bag value (ii) calculating, using a loss function, a prediction error based on a comparison between the predicted bag values and the corresponding target bag values and (iii) updating the plurality of network parameters by optimizing the loss function.

Finally, in step 104, the trained model with the optimized network parameters is outputted for use in generating a bag value based on an input bag of feature vectors representing single-cell images of a sample, wherein from the bag value the bag of feature vectors can be labelled as indicative or non-indicative for the defined cell type and/or cellular indicators.

Figure 2 illustrates the workflow of a preferred embodiment 200 of the method for detecting one or more defined cell types and/or cellular indicators from single-cell images obtained from a sample of a body liquid, bone marrow or cytology smear. Method 200 comprises a first step 201 where each single-cell image is embedded into a feature vector by means of a second trained neural network, advantageously a trained convolutional neural network or a trained transformer neural network. Details of the second neural network were presented above.

In step 202, at least one bag of feature vectors representative for the sample is defined. The number of bags per sample can be advantageously from 1 to 10 but could also be more than 10. The bag size can be from dozens of cells to millions of cells. The minimum bag size can be calculated from the detection limit of the ground truth, the best possible detection limit of the model, and the yield of the segmentation step. The model's theoretical best detection limit for a bag size of m feature vectors is 1/M, and the segmentation yield can be denoted Ys. If a limit of detection of 10% is assumed, the minimum bag size is found by: 1/(M*Ys) >= 10%.

In step 203 a bag value is derived by means of the trained model presented in Figure 1. The bag value can then be compared in step 204 to a predetermined threshold value for determining the label of the bag, or to a previous value in order for instance to determine growth of the aberration-carrying cell population in the sample.

Finally in step 205, the sample is classified as indicative of the one or more defined cell types and/or cellular aberrations when an indicative value dependent on the number of bags of feature vectors labelled as indicative meets or exceeds a predetermined threshold value. Important note is that the number of bags can be one, in particular when the size of the bag is chosen such that the bag is for sure relevant for the sample; meaning that the bag and the sample can only have the same label.

As mentioned above, the trained model of the first aspect of the present invention can be used to make single-cell prediction. This information combined with information on the localization of each cell that can be outputted by the first network allows for the creation of a heat map that overlies the single-cell prediction on the original whole slide image.

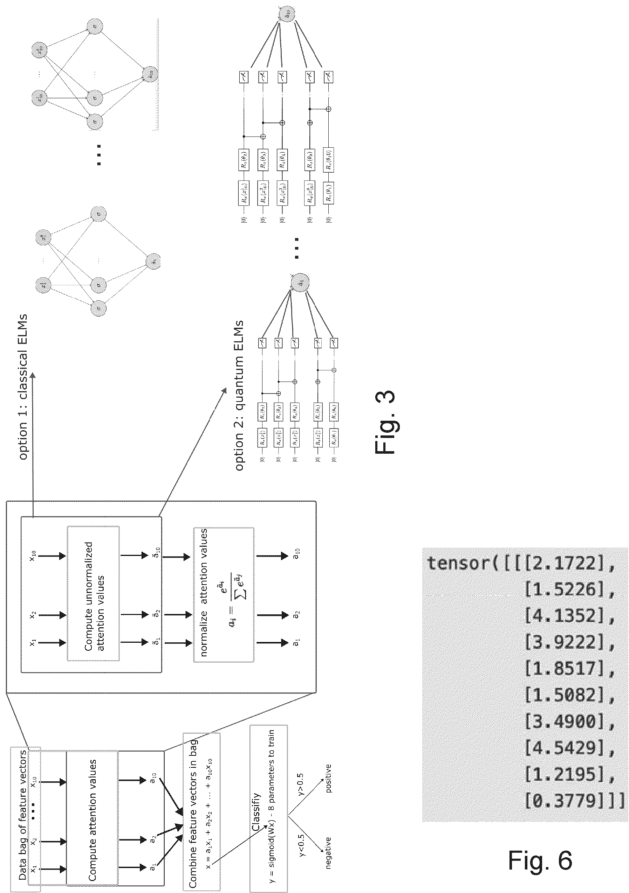

Figure 3 presents two specific embodiments for an attention-based Multiple Instance Learning model used in the training method as well as in the detection method according to the present invention. As schematically depicted on the left side of this image, an attention-based Multiple Instance Learning model receives bags of feature vectors (here marked as x₁ to x₁₀) and for each feature vector in a bag, an attention value (or weight) is computed. In a further step, the feature vectors in the bag are combined to form a bag vector by a weighted sum, where the attention values serve as the weights for each feature vector. Finally, a bag valuey is derived from the bag vector by applying a non-linear transformation, such as an activation function like ReLU, tanh or a sigmoid function. Here a threshold value 0.5 has been selected, meaning that for y≤0.5 the bag is labelled negative and for y>0.5 the bag is labelled positive.

As illustrated in the middle panel of Figure 3, the computation of the attention values is actually a two-step process where in a first step unnormalized attention values are derived before in a second step the attention values are normalized. The present invention proposes to use an Extreme Learning Machine model to compute the unnormalized attention values. More specifically, the present invention proposes to use either (1) a classical Extreme Learning Machine or (2) a Quantum Extreme Learning Machine for that purpose.

In a specific implementation of option (1), the Extreme Learning Machine takes the form of a fully connected neural network of three layers (one input, one hidden and one output layer). All the parameters (weights and nodes) of the hidden layer are randomly initialized and the weights of the first layer (more precisely the weight connecting the nodes of the input layer to the nodes of the hidden layer) are kept fixed during training. On the contrary, the weights of the second layer (more precisely the weight connecting the nodes of the hidden layer with the node of the output layer) are optimized during training. This allows for a very efficient and resource-saving training as well inference. Assuming that each feature vectors has eight components (features) and that the hidden layer comprises 1024 nodes, only 1024 parameters need to be optimized while in the state of the art, the parameters of the first layer are also trained leading to 8x1024 + 1024 parameters to be optimized.

In a specific implementation of option (2) all layers of the Extreme Learning Machine except for the final layer are implemented on a quantum computer. First and as illustrated in the right lower panel of Figure 3, the feature vectors are encoded in the quantum state space of the qubits and initialised by applying random unitary transformations. The quantum circuit consists of a layer of Rx gates where the embedded angles consist of the values of the features as also described here:
https://docs.pennylane.ai/en/stable/code/api/pennylane.AngleEmbedding.html. There is 1 qubit for each feature (e.g. 8 qubits for 8 features in the present case). Then basic entangling layers consisting of a layer of single qubit Rx gates with random parameters, followed by a layer of CNOT gates as also described here: https://docs.pennylane.ai/en/stable/code/a pi/pen nylane. BasicEn tanglerLayers.html are used. These basic entangling layers can be applied several times (for example twice) with all the single qubit gate parameters initialized randomly. The Z expectation values of each qubit is then measured and use to construct the next feature vector.

The methods described for the present invention have been tested for the detection of cells of a defined cell type, specifically erythroblasts, in images from the freely available BloodMNIST database (see https://medmnist.com). It consists of microscopic images of blood samples taken from healthy individuals without any infections, haematological or oncological diseases and not undergoing any pharmacological treatment at the time of blood collection. In a first step, bags of 10 images were created with a defined label (see Figure 4 for a bag labelled "1", i.e. positive for the presence of erythroblasts). The second step was to embed the images into feature vectors using a ResNet-18 model. Figure 5 shows the result of the embedding for the bag of 10 images shown in Figure 4. Such 800 bags of feature vectors with a known label were formed for training the training method of the present invention. Similarly, a validation set of 200 bags was created. Advantageously, the bags of the training data set comprise either 0 or 1 single-cell image of the determined cell type.

Returning to the methods of the invention presented in the figures, Figure 6 shows the results of the weighted sum of all the feature vectors of the bag of Figure 5 (see Figure 3, left panel). As can be seen in Figure 6, the 8th component of this resulting vector has the highest value, which is not surprising since it corresponds to the 8th image of the bag of Figure 4, i.e. the image of an erythroblast. In a further step, the resulting bag vector is passed through a linear and a sigmoid layer of the Multiple Instance Learning model to obtain a scalar bag value y. In the present example, if y≤0.5 the bag is labelled negative and if y>0.5 it is labelled positive.

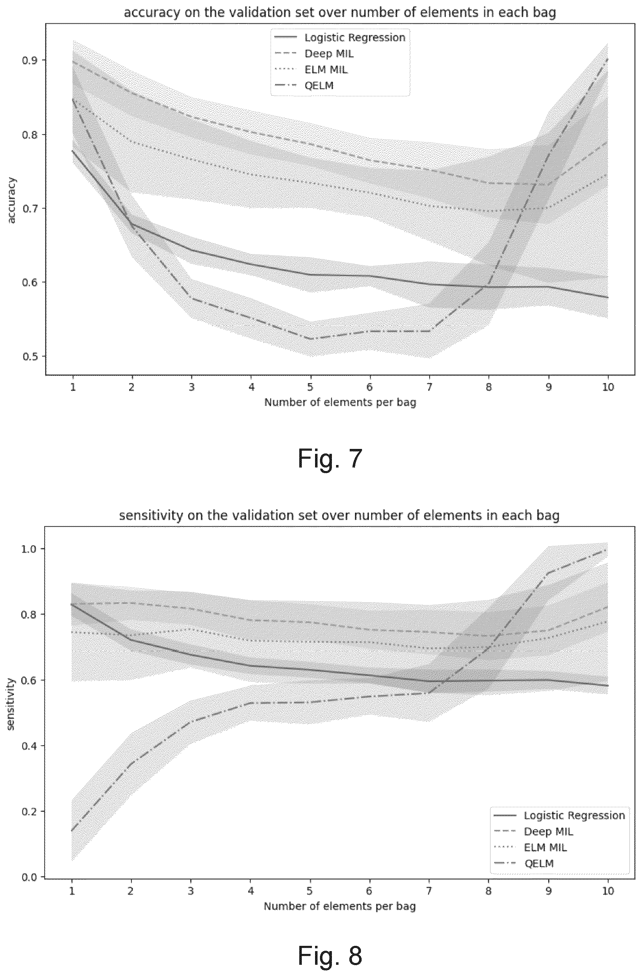

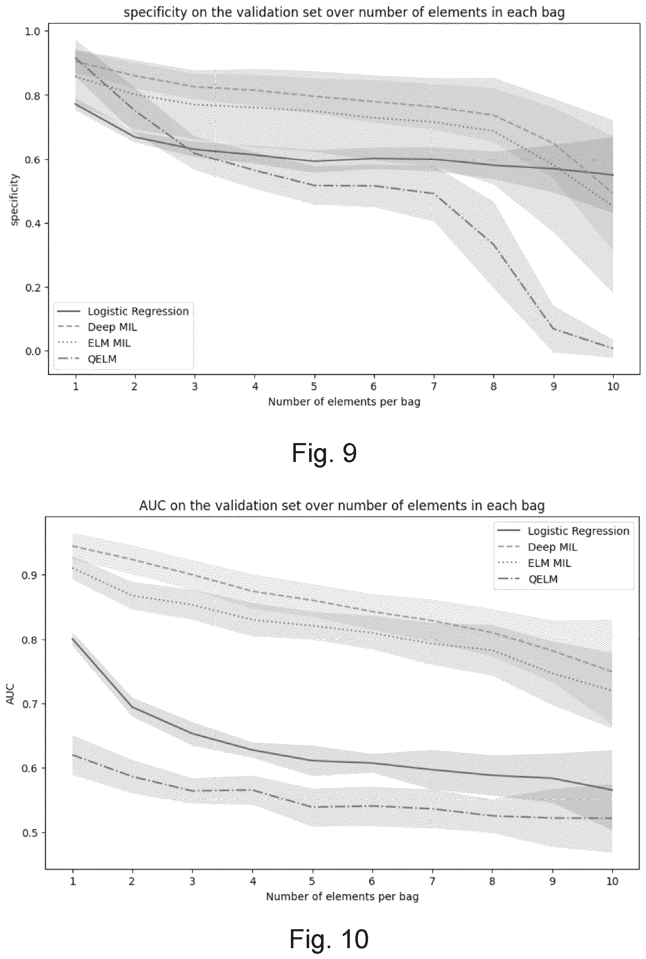

It is important to understand that the present invention proposes to use a first neural network in the form of an Extreme Learning Machine to compute the unweighted attention values. The steps of normalising the attention values, combining the feature vectors of a bag and computing the bag value are carried out using methods known from the prior art. Figures 7 to 10 show the experimental results for accuracy, sensitivity, specificity and area under the curve obtained in the detection of erythroblasts from the BloodMNIST database as a function of the number of elements per bag for two known known methods, more specifically Averaging + Logistic Regression and Traditional Multiple Instance Learning (using a Convolutional Neural Network as the first network), and the two options for the detection method of the present invention (Classical ELM and Quantum ELM (QELM) as the first neural network).

Figures 7 to 10 present preliminary experimental results showcasing the ability of the methods of the present invention for detecting one or more defined cell types and/or cellular indicators. As can be seen in these Figures, for Option 1, i.e. classical ELM as the first neural network of the MIL model, the metrics are similar to those obtained from traditional MIL-based detection methods but, as explained above, require much less computer resources for training and inference. For the QELM option, the metrics are highly dependent on the number of elements in the bag. The accuracy and the sensitivity surpass the values obtained from the other methods while for specificity and AUC the obtained values are lower. It is important to note that for both options accuracy and AUC values are above 0.5, indicating that the model has learned from the data and is providing useful information. Furthermore, in the quantum ELM model the AUC is more stable as the number of non-indicative elements in the bag increases. This indicates that the trade-off between sensitivity and specificity is also stable. As a result, the predictive value of the model is less susceptible to fluctuations in bag size and prevalence of the cell type of interest. Furthermore, it is important to note that both the quantum and classical ELM models have not been optimized yet so that the presented results are a baseline and are likely to improve with an advanced hyper-parameter optimization.

For the classical ELM implementation, the tests were performed on a CPU Apple M2 with 32 GB of memory and on a Nvidia A100 40GB RAM. The quantum ELM implementation, the quantum computing part was performed on an IBM QPU with a Heron r2 processor and 156 qubits, and the classical part on a CPU Apple M2 with 32 GB of memory.

## Claims

1. A computer-implemented method for producing a trained model for detecting one or more defined cell types and/or cellular indicators, such as biomarkers or cellular abnormalities, in particular genomic aberrations, from single-cell images obtained from a sample of a body liquid, bone marrow, cytology smear or slide preparations, in particular a blood smear sample, comprising:
a. receiving a training dataset comprising bags of feature vectors representing single-cell images of samples and corresponding target bag values;
b. initializing a first neural network of an attention-based Multiple Instance Learning model with a plurality of network parameters to compute an attention weight for each feature vector of the bags from which predicted bag values can be generated by the attention-based Multiple Instance Learning model;
c. training the first neural network by:
i. processing, by the attention-based Multiple Instance Learning model, the plurality of bags of feature vectors to generate predicted bag values;
ii. calculating, using a loss function, a prediction error based on a comparison between the predicted bag values and the corresponding target bag values;
iii. updating at least a portion the plurality of network parameters by optimizing the loss function;
d. outputting the trained model with the optimized network parameters for use in generating a bag value based on an input bag of feature vectors representing single-cell images of a sample, wherein from the bag value the bag of feature vectors can be labelled as indicative or non-indicative for the defined cell type and/or cellular indicators;
wherein the first neural network is an extreme learning machine (ELM).

2. The method of claim 1, wherein the parameters of all the layers of the first neural network are randomly initialised and only the parameters of the final layer are optimized during training.

3. The method according to claim 1 or 2, wherein the first neural network is implemented on a classical computer and is a fully connected neural network.

4. The method according to claim 1 or 2, wherein all layers except for the final layer of the first neural network are implemented on a quantum computer.

5. The method according to claim 4, wherein the feature vectors of the bags are encoded in the quantum state space of the qubits and initialised by applying random unitary transformations.

6. The method according to claim 4 or 5, wherein all layers except for the final layer of the first neural network form a fully entangling quantum circuit.

7. The method according to any one of the preceding claims, wherein the feature vectors are obtained by segmenting, advantageously by means of a third neural network, at least part of a whole slide image, and wherein the minimal size of the bags of the training data set is determined based on the segmentation yield and the detection limit of the ground truth.

8. The method according to claim 7, wherein the minimal size of the bags of the training data set is determined based on the segmentation yield, the detection limit of the ground truth and an error value reflecting the statistical variation in bag sampling.

9. The method according to any one of the claims 7 or 8, wherein the model is trained on bags of feature vectors that have undergone defined set of transformations, wherein advantageously the spatial distance between feature vectors stemming from different cell types is maximized and the spatial distance between feature vectors stemming from the same cell type is minimized.

10. The method according to any one of the preceding claims further comprising a step of bag-level augmentation.

11. A computer-implemented method for detecting one or more defined cell types and/or cellular indicators, such as biomarkers or cellular abnormalities, in particular genomic aberrations, from single-cell images obtained from a sample of a body liquid, bone marrow or cytology smear, in particular a blood smear sample, comprising the following steps:
a. Receiving feature vectors representing the plurality of single-cell images;
b. Defining at least one bag of feature vectors representative for the sample, wherein each feature vector represents a single-cell image;
c. Deriving from the at least one bag of feature vectors a bag value by means of a trained model according to any one of the claims 1 to 9.
d. Labelling the bag as indicative or non-indicative for the defined cell type and/or cellular indicators from the bag value;
e. Classifying the sample as indicative of the one or more defined cell type and/or cellular indicators when an indicative value dependent on the number of bags of feature vectors labelled as indicative meets or exceeds a predetermined threshold value.

12. The method according to claim 10, wherein each single-cell image was embedded into a feature vector by means of a second trained neural network, advantageously a trained convolutional neural network or a trained transformer neural network.

13. The method according to any one of the claims 10 or 11, wherein the single-cell images are obtained by segmenting at least a part of a whole slide image of the sample, advantageously by means of a third trained convolutional neural network.

14. The method according to any one of the claims 10 to 12, the minimal size of the at least one bag is given by the segmentation yield and the detection limit of the ground truth.

15. The method according to any one of the claims 10 to 13, further comprising a step of labelling by the model of any one of the claims 1 to 9 at least a part of the single-cell images corresponding to the feature vectors of the bag as indicative or non-indicative of the one or more defined cell types and/or cellular indicators.

16. The method according to claim 14, wherein the method comprises a step of generating a heat-map of the labelled cells present within the at least part of a whole slide image, said heat-map being produced based on spatial location data for each of said labelled cells.

17. The method according to any one of the claims 10 to 15, wherein the method comprises between steps a. and b. a step of classifying the single-cell images into cell-types and wherein the bag of feature vectors comprises only feature vectors corresponding to one cell-type.

18. The method according to any one of the claims 10 to 16, wherein the indicative value is the percentage of bags of feature vectors labelled as indicative.

19. The method according to any of the claims 10 to 17 further comprising a step of generating a sub-cellular heat map for indicating the pixel-level position of any shape or texture changes in the cell resulting from the one or more indicators in the single-cell images.

20. A data processing system comprising means for carrying out the steps of the method of claim 1 to 9 and/or the steps of the method of claim 10 to 18.

21. A computer program product comprising instructions which, when the program is executed by a computer, cause the computer to carry out the steps of the method of claim 1 to 9 and/or the steps of the method of claim 10 to 18.

22. A computer-readable storage medium comprising instructions which, when executed by a computer, cause the computer to carry out the steps of the method of claim 1 to 9 and/or the steps of the method of claim 10 to 18.
